# EUROPEAN PATENT APPLICATION

(11) **EP 4 672 481 A1**
(43) Date of publication of application: **31.12.2025**
(21) Application number: 24760143.8
(22) Date of filing: 08.02.2024
(51) Int. Cl.: H01M 50/533, H01G 2/24, H01G 4/32, H01G 9/00, H01G 13/00, H01M 50/536

(54) **ELECTRODE PLATE, MANUFACTURING METHOD THEREFOR, AND BATTERY**

(30) Priority: 21.02.2023 JP 2023025395
(71) Applicant: Panasonic Energy Co., Ltd., Osaka 570-8511 (JP)
(72) Inventor: DAVIS Jerome, Kadoma-shi, Osaka 571-0057 (JP); KATO Genichiro, Kadoma-shi, Osaka 571-0057 (JP)
(74) Representative: Eisenführ Speiser
(86) International application number: PCT/JP2024/004230
(87) International publication number: WO 2024/176841

(57) **Abstract**

An electrode plate, which is an example of an embodiment of the present invention, has a core body and a mixture layer formed on the core body, and is provided with an exposed part where the surface of the core body is exposed. The electrode plate has a lead joined to the exposed part, and an identification display part (36) formed on the outer surface of the lead. The identification display part (36) includes at least one of a discolored part and a recess formed on the outer surface of the lead by a melting and solidifying part that penetrates the lead in the thickness direction and reaches the exposed part and joins the lead and the exposed part.

## Description

### TECHNICAL FIELD

The present disclosure relates to an electrode plate and a method of producing the electrode plate, and a battery.

### BACKGROUND ART

Conventionally known is an electrode plate provided with an identification mark (for example, see PATENT LITERATURE 1). The identification mark makes it possible to specify production lines, production date, and the like of the electrode plate. If a failure occurs for some reason in a process of producing a battery or after shipment of a battery, for example, the identification mark of the electrode plate is used to analyze a cause of the failure.

PATENT LITERATURE 1 discloses that an identification mark is provided on at least one of a positive electrode lead, a negative electrode lead, a core exposed portion of a positive electrode, and a core exposed portion of a negative electrode.

### CITATION LIST

### PATENT LITERATURE

PATENT LITERATURE 1: Japanese Unexamined Patent Application Publication No. 2006-040875

### SUMMARY

As a result of studies by the present inventors, it has been found that in a case where the identification mark is provided on the core exposed portion (exposed portion) of the electrode plate as disclosed in PATENT LITERATURE 1, because of low stiffness of the exposed portion, the identification mark is deformed by a tensile force acting on the exposed portion during the charging and discharging of the battery. If the identification mark is deformed, it may be difficult to read the mark.

Then, it is conceivable that an identification mark is provided on a surface of a lead that has a higher stiffness than that of the exposed portion, thereby making it difficult to cause deformation during the charging and discharging. On the other hand, in a case where the lead and the exposed portion are joined, deformation such as a recess often occurs in the surface of the lead due to pressing by a joining member, melting of the lead during welding, or the like. Therefore, it is conceivable that an identification mark portion is provided at a position that does not overlap with a joint portion of the lead in a thickness direction of the lead, but in such a case, a formation range of the identification mark portion in the lead becomes narrow. This makes it difficult to provide a plurality of identification marks having the same contents to increase the opportunities to read the identification marks or to provide a plurality of identification marks having different contents from each other to increase the identification information.

An electrode plate according to the present disclosure has a core, and a mixture layer formed on the core, and is provided with an exposed portion where a surface of the core is exposed, the electrode plate having a lead joined to the exposed portion, and an identification mark portion formed on an outer surface of the lead, in which the identification mark portion includes at least one of a discolored portion and a recess formed in the outer surface of the lead by a molten and solidified portion that penetrates the lead in a thickness direction to reach the exposed portion, and joins the lead and the exposed portion.

A battery according to the present disclosure comprises an electrode assembly that includes the above-described electrode plate, and an outer housing body that houses the electrode assembly.

A method of producing an electrode plate according to the present disclosure is a method of producing an electrode plate that has a core, and a mixture layer formed on the core, and is provided with an exposed portion where a surface of the core is exposed, the electrode plate having a lead joined to the exposed portion, and an identification mark portion formed on an outer surface of the lead, the method including irradiating the lead from outside with laser light in a state in which the lead is stacked on the exposed portion to form a molten and solidified portion that penetrates the lead in a thickness direction to reach the exposed portion, and joins the lead and the exposed portion, so that the identification mark portion is formed from at least one of a discolored portion and a recess formed in the outer surface of the lead by the molten and solidified portion.

According to an electrode plate and a battery, and a method of producing the electrode plate according to the present disclosure, an identification mark portion formed on an outer surface of a lead includes at least one of a discolored portion and a recess formed by a molten and solidified portion that joins the lead and the exposed portion. Thus, in the lead, the identification mark portion can be used as a joint portion that joins the lead and the exposed portion. Therefore, the formation range of the identification mark portion in the lead can be widened.

### BRIEF DESCRIPTION OF DRAWINGS

FIG. 1 is a sectional view of a cylindrical battery, which is one example of an embodiment.
FIG. 2 is a front view of a positive electrode plate, which is one example of the embodiment, and a diagram illustrating a positive electrode lead and a portion near the positive electrode lead.
FIG. 3 is a front view of a negative electrode plate, which is one example of the embodiment, and a diagram illustrating a negative electrode lead and a portion near the negative electrode lead.
FIG. 4 is a diagram illustrating a state in which the positive electrode lead and an exposed portion are joined by a molten and solidified portion that forms an identification mark portion, and shows a sectional view of the positive electrode lead and the exposed portion.
FIG. 5 is a diagram corresponding to FIG. 2, in a positive electrode plate of a comparative example.

### DESCRIPTION OF EMBODIMENTS

Hereinafter, one example of an embodiment of an electrode plate according to the present disclosure, and a battery using the electrode plate will be described in detail with reference to the drawings. The embodiment described below is only an example, and the present disclosure is not limited to the embodiment described below. Forms obtained by selectively combining each component of the embodiment described below are included in the present disclosure.

Hereinafter, a cylindrical battery 10 in which a wound electrode assembly 14 is housed in a bottomed cylindrical exterior housing can 16 is illustrated, but an outer housing body of the battery is not limited to the cylindrical outer housing can. The battery according to the present disclosure may be, for example, a prismatic battery comprising a rectangular exterior housing can or a coin type battery comprising a coinshaped exterior housing can, or may be a pouch type battery comprising an outer housing body formed of a laminate sheet including a metal layer and a resin layer. Note that the cylindrical battery 10 of the present embodiment is a secondary battery, but the electrode plate according to the present disclosure can be applied to a power storage device other than the secondary battery, such as a primary battery and a capacitor.

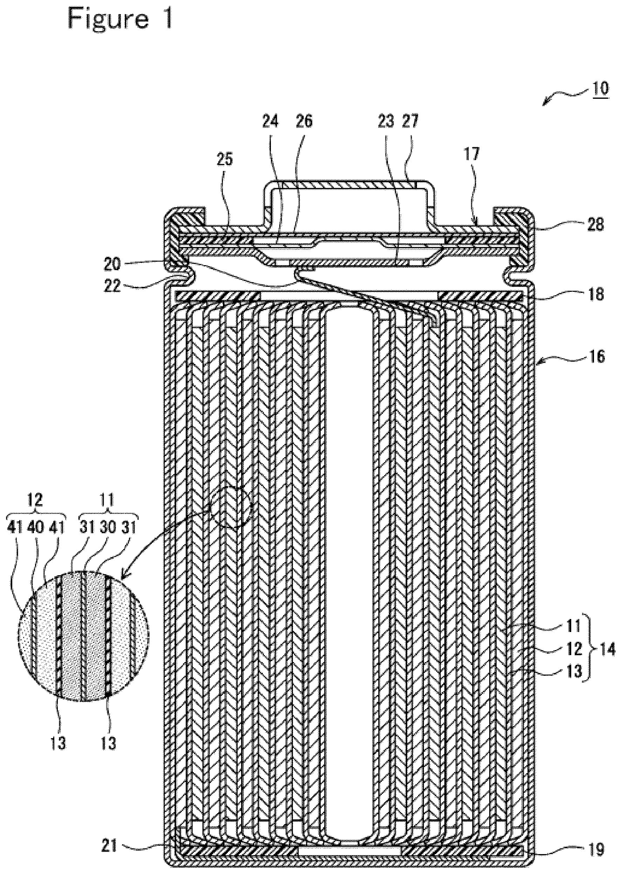

FIG. 1 is a diagram schematically illustrating an axial cross section of the cylindrical battery 10, which is one example of the embodiment. As illustrated in FIG. 1, the cylindrical battery 10 comprises the electrode assembly 14, an electrolyte, and the outer housing can 16 that houses the electrode assembly 14 and the electrolyte. The electrode assembly 14 has a positive electrode plate 11, a negative electrode plate 12, and a separator 13, and has a wound structure in which the positive electrode plate 11 and the negative electrode plate 12 are spirally wound with the separator 13 interposed therebetween. Each of the positive electrode plate 11 and the negative electrode plate 12 corresponds to an electrode plate. The outer housing can 16 is a bottomed cylindrical metallic container in which one side in an axial direction is open, and an opening of the outer housing can 16 is capped with a sealing assembly 17. Hereinafter, for convenience of description, the sealing assembly 17 side of the cylindrical battery 10 will be described as an "upper side", and a bottom side of the outer housing can 16 will be described as a "lower side".

The electrolyte may be an aqueous electrolyte, but a non-aqueous electrolyte shall be used in the present embodiment. The non-aqueous electrolyte includes a non-aqueous solvent, and an electrolyte salt dissolved in the non-aqueous solvent. For the non-aqueous solvent, esters, ethers, nitriles, amides, and mixed solvents containing two or more selected from the foregoing may be used, for example. Examples of non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) obtained by substituting at least some of hydrogen atoms in these solvents with a halogen atom such as fluorine. For example, as the electrolyte salt, a lithium salt such as LiPF₆ is used.

Any of the positive electrode plate 11, the negative electrode plate 12, and the separator 13 constituting the electrode assembly 14 is a band-shaped elongated member, and spirally wound to be stacked in the radial direction of the electrode assembly 14. The negative electrode plate 12 is formed to be one size larger than the positive electrode plate 11 in order to prevent precipitation of lithium. That is, the negative electrode plate 12 is formed to be longer in the longitudinal direction and the width direction (short direction) than the positive electrode plate 11. The two separators 13 are each formed to be at least one size larger than the positive electrode plate 11, and are disposed so as to interpose the positive electrode plate 11 therebetween.

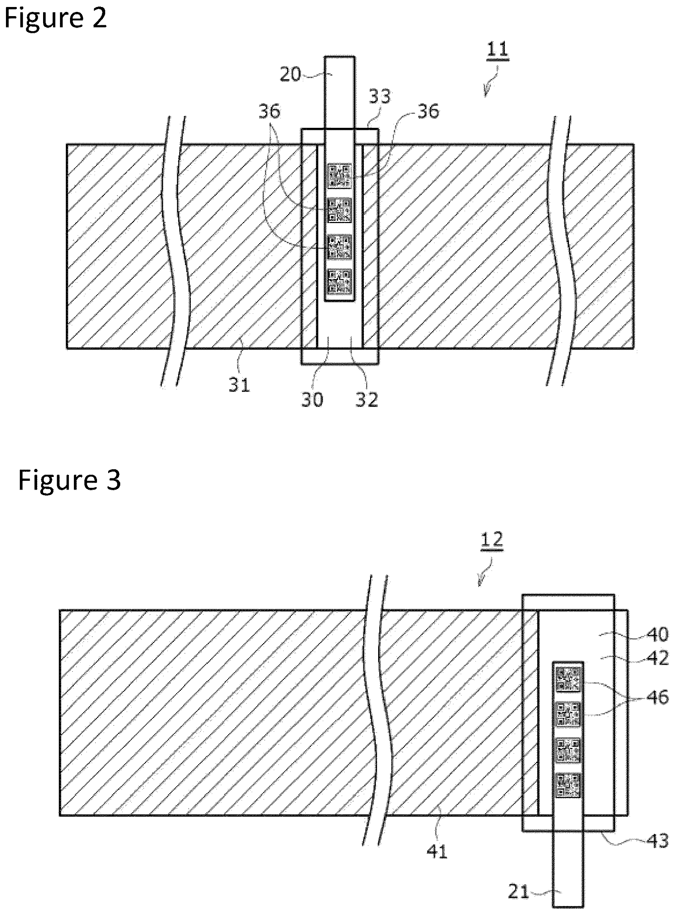

The positive electrode plate 11 has a positive electrode core 30 and a positive electrode mixture layer 31 formed on each surface of the positive electrode core 30. For the positive electrode core 30, a foil of a metal, such as aluminum or an aluminum alloy, which is stable within a potential range of the positive electrode plate 11, a film in which such a metal is disposed on a surface layer thereof, and the like may be used. The positive electrode mixture layer 31 includes a positive electrode active material, a conductive agent such as carbon black, or a carbon nanotube, and a binder such as polyvinylidene fluoride, and is preferably formed on each surface of the positive electrode core 30 except for an exposed portion 32 (see FIG. 2) to be described later. The positive electrode plate 11 may be produced by: applying a positive electrode mixture slurry including the positive electrode active material, the conductive agent, and the binder on each surface of the positive electrode core 30; and compressing the resulting coating film.

Examples of the positive electrode active material included in the positive electrode mixture layer 31 include a lithium-transition metal composite oxide. The lithium-transition metal composite oxide is a composite oxide containing metal elements such as Co, Mn, Ni, and Al in addition to Li. A metal element contained in the composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these elements, at least one selected from Ni, Mn, and Co is preferably contained.

The negative electrode plate 12 has a negative electrode core 40 and a negative electrode mixture layer 41 formed on each surface of the negative electrode core 40. For the negative electrode core 40, a foil of a metal, such as copper or a copper alloy, which is stable within a potential range of the negative electrode plate 12, a film in which such a metal is disposed on a surface layer thereof, and the like may be used. The negative electrode mixture layer 41 includes a negative electrode active material, a binder, and, as necessary, a conductive agent such as carbon black or a carbon nanotube, and is preferably formed on each surface of the negative electrode core 40 except for an exposed portion 42 (see FIG. 3) to be described later. For the binder, for example, a styrene-butadiene rubber (SBR) may be used, and carboxymethyl cellulose or a salt thereof, or the like may be used in combination therewith. The negative electrode plate 12 may be produced by: applying a negative electrode mixture slurry including the negative electrode active material and the binder on each surface of the negative electrode core 40; and compressing the resulting coating film.

Examples of the negative electrode active material included in the negative electrode mixture layer 41 include carbon materials such as graphite that reversibly occlude and release lithium ions. The graphite may be any of natural graphite and artificial graphite. For the negative electrode active material, an element that forms an alloy with Li such as Si and Sn, and a material containing the element may be used. Among them, a composite material containing Si is preferably used. A preferable example of the composite material containing Si includes a material including a fine Si phase dispersed in an SiO₂ phase, a silicate phase such as lithium silicate, a carbon phase, or a silicide phase.

For the separator 13, a porous sheet having ion permeability and an insulation property is used. Specific examples of the porous sheet include a microporous thin film, a woven fabric, and a nonwoven fabric. Suitable examples of a material for the separator 13 include a polyolefin such as polyethylene or polypropylene, or a cellulose. The separator 13 may have either a single-layer structure or a multi-layer structure. The separator 13 may have a high heat resistant resin layer such as aramid resin formed on its surface. At least one of interfaces between the separator 13 and the positive electrode plate 11 and between the separator 13 and the negative electrode plate 12 may have a filler layer that contains an inorganic filler.

Insulating plates 18 and 19 are disposed on the upper and lower sides of the electrode assembly 14, respectively. In the example illustrated in FIG. 1, a positive electrode lead 20 extends toward the sealing assembly 17 through a through hole in the insulating plate 18, and a negative electrode lead 21 extends toward the bottom side of the outer housing can 16 through the outside of the insulating plate 19. The positive electrode lead 20 is connected to a lower surface of an internal terminal plate 23 of the sealing assembly 17, by means of laser welding or the like, and a cap 27 which is a top plate of the sealing assembly 17 electrically connected to the internal terminal plate 23 serves as a positive electrode terminal. The negative electrode lead 21 is connected to a bottom inner surface of the outer housing can 16, by means of laser welding or the like, and the outer housing can 16 serves as a negative electrode terminal.

The positive electrode lead 20 is joined to the positive electrode core 30 by means of laser welding with formation of identification mark portions 36 (FIG. 2) as described later. The positive electrode lead 20 is joined to a longitudinal center portion away from both ends of the positive electrode plate 11 in the longitudinal direction, for example. The positive electrode lead 20 may be joined to a position that is substantially equally distant from both ends of the positive electrode plate 11 in the longitudinal direction. The negative electrode lead 21 is joined to the negative electrode core 40 by means of laser welding with formation of identification mark portions 46 (FIG. 3) as described later. In the example illustrated in FIG. 1, the negative electrode lead 21 is joined to a winding finish side end portion serving as an end portion of the negative electrode plate 12 in the longitudinal direction that is located on the outer circumferential side of the electrode assembly 14. The positive electrode lead 20 and the negative electrode lead 21 each are, for example, a band-shaped metallic member, and have a thickness of greater than or equal to 30 µm and less than or equal to 100 µm.

The negative electrode plate 12 may be disposed on the outer circumferential surface of the electrode assembly 14. In addition, an exposed portion where a surface of the negative electrode core 40 is exposed may be formed on the outer circumferential surface of the electrode assembly 14, and the exposed portion may contact an inner surface of the outer housing can 16 so that the negative electrode plate 12 and the outer housing can 16 are electrically connected to each other. In this case, the negative electrode plate 12 need not have the negative electrode lead 21, and need not have an identification mark portion 46 to be described later.

The outer housing can 16 is a bottomed cylindrical metallic container in which one side in an axial direction is open, as described above. A gasket 28 is provided between the outer housing can 16 and the sealing assembly 17 to achieve the sealability inside the battery and the insulation property between the outer housing can 16 and the sealing assembly 17. The outer housing can 16 has a grooved portion 22 for supporting the sealing assembly 17, the grooved portion 22 being formed by a part of a side wall projecting inward. The grooved portion 22 is preferably formed in an annular shape along a circumferential direction of the outer housing can 16 and supports the sealing assembly 17 on an upper surface of the grooved portion 22. The sealing assembly 17 is fixed to an upper portion of the outer housing can 16 by the grooved portion 22, and an opening end of the outer housing can 16 is crimped and fixed to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective center portions, and the insulating member 25 is interposed between the circumferential edge portions of the vent members 24 and 26. If an abnormality occurs in the battery and the internal pressure of the battery increases, the lower vent member 24 is deformed to push up the upper vent member 26 toward the cap 27 side and breaks, resulting in cutting off of a current pathway between the lower vent member 24 and the upper vent member 26. If the internal pressure further increases, the upper vent member 26 breaks, and gas is discharged through an opening of the cap 27.

Hereinafter, the positive electrode plate 11 and the negative electrode plate 12 will be described in detail with reference to FIGS. 2 and 3. In FIGS. 2 and 3, the mixture layer is indicated by hatching lines. As described above, the positive electrode plate 11 has the positive electrode core 30, and the positive electrode mixture layer 31 formed on each surface of the positive electrode core 30. Similarly, the negative electrode plate 12 has the negative electrode core 40, and the negative electrode mixture layer 41 formed on each surface of the negative electrode core 40.

As illustrated in FIG. 2, the positive electrode plate 11 has the exposed portion 32 formed in which a surface of the positive electrode core 30 is exposed. The exposed portion 32 is formed in which the positive electrode mixture slurry is not applied on the positive electrode core 30 so that the positive electrode mixture layer 31 is not provided. Alternatively, the exposed portion 32 may be formed by peeling a part of the positive electrode mixture layer 31. In the present embodiment, the exposed portion 32 is formed at one position of a center portion of the positive electrode plate 11 in the longitudinal direction. Note that the position where the exposed portion 32 is formed is not limited to the center portion of the positive electrode plate 11 in the longitudinal direction, and for example, the exposed portion 32 may be formed at each of a plurality of positions spaced from each other in the longitudinal direction.

The positive electrode plate 11 has the positive electrode lead 20 joined to the exposed portion 32 and a plurality of identification mark portions 36 formed on the outer surface of the positive electrode lead 20. On the outer surface of the positive electrode lead 20, the plurality of identification mark portions 36 are arranged in line at intervals in the longitudinal direction (an up-down direction in FIG. 2) of the positive electrode lead 20. In FIG. 2, four identification mark portions 36 are provided on the positive electrode lead 20, but the number of identification mark portions 36 is not limited to a particular number and, for example, any number of plural identification mark portions 36 other than 4 may be provided. Each of the identification mark portions 36 is formed by a molten and solidified portion that penetrates the positive electrode lead 20 in the thickness direction to reach the exposed portion 32, and joins the positive electrode lead 20 and the exposed portion 32. This makes it possible to use the identification mark portion 36 as a joint portion that joins the positive electrode lead 20 and the exposed portion 32, so that a formation range of the identification mark portion 36 in the positive electrode lead 20 can be widened. The identification mark portion 36 will be described in detail later.

In a case where a plurality of exposed portions 32 are formed in the positive electrode plate 11 and one positive electrode lead 20 is joined to each of the exposed portions 32, it is sufficient that the identification mark portion 36 is formed on any one of the positive electrode leads 20, but the identification mark portions 36 may be also formed on a plurality of positive electrode leads 20 or all the positive electrode leads 20.

The exposed portion 32 preferably includes a first surface to which the positive electrode lead 20 is to be joined, and a second surface opposite to the first surface. That is, the positive electrode lead 20 is joined only to one surface of the positive electrode core 30, and the exposed portion 32 is also formed on the other surface on which the positive electrode lead 20 is not disposed. The second surface of the exposed portion 32 is preferably formed to overlap with the first surface in the thickness direction of the positive electrode plate 11 at substantially the same size as the first surface.

The exposed portion 32 is formed over the entire length in the width direction of the positive electrode plate 11 (may be formed so as to have a length that is short of extending from one end to the other end in the up-down direction in FIG. 2, but is formed over the entire length in the width direction of the positive electrode plate 11 in the example illustrated in FIG. 2). The exposed portion 32 is formed to be wider than the positive electrode lead 20. The width of the exposed portion 32 is, for example, constant over the entire length, and is greater than or equal to 1.5 times and less than or equal to 2.0 times the width of the positive electrode lead 20. In this case, the high capacity can be maintained without causing any trouble in joining of the positive electrode lead 20. An example of the width of the exposed portion 32 is greater than or equal to 5 mm and less than or equal to 8 mm.

A tape 33 that covers the positive electrode lead 20 is provided in the positive electrode plate 11. The tape 33 preferably covers the positive electrode lead 20, the exposed portion 32, and a region adjacent to the exposed portion 32 in the positive electrode mixture layer 31. In addition, the tape 33 preferably covers the entirety of the exposed portion 32 including a region in which the positive electrode lead 20 is present, is formed in a strip shape to be one size larger than the exposed portion 32, and is provided to protrude from the exposed portion 32 in the longitudinal direction (a left-right direction in FIG. 2) and the width direction of the positive electrode plate 11. The tape 33 is preferably provided on each surface of the positive electrode core 30. In a part of the positive electrode lead 20 extending from an upper portion of the exposed portion 32, a protective tape facing the negative electrode (not illustrated) can be provided in at least a range facing the negative electrode plate 12 via the separator 13.

The tape 33 has, for example, a substrate formed from insulating resin, and an adhesive layer formed on one surface of the substrate. Note that the same one as the tape 33 can be used for the protective tape facing the negative electrode. The tape 33 is preferably an insulating tape substantially having no electrical conductivity. The tape 33 may have a layer structure including at least three layers, and the substrate may be formed of at least two layers of film of the same type of materials or different type of materials. The tape 33 may contain an inorganic filler such as titania, alumina, silica, or zirconia, and may preferably have a light-transmitting property to an extent that the identification mark portion 36 is readable through the tape 33. The tape 33 may be colored transparent or colorless transparent.

Examples of resin forming the substrate of the tape 33 include a polyester such as poly ethylene terephthalate (PET), a polypropylene (PP), a polyimide (PI), a poly phenylene sulfide (PPS), a poly ether imide (PEI), and a polyamide. The adhesive layer is formed, for example, by applying an adhesive on one surface of the substrate. Although the adhesive forming the adhesive layer may be either a hot melt type which exhibits an adhesive property by heating or a thermosetting type which is cured by heating, in consideration of productivity and the like, an adhesive having an adhesive property at room temperature is preferable. Examples of the adhesive forming the adhesive layer include an acrylic-based adhesive and a synthetic rubber-based adhesive.

As described above, the plurality of identification mark portions 36 are formed on the outer surface of the positive electrode lead 20 by the respective molten and solidified portions that join the positive electrode lead 20 and the exposed portion 32. The identification mark portion 36 is an individual mark attached to the positive electrode plate 11, and provides identification information for differentiating it from another positive electrode plate 11. The identification mark portions 36 are provided to be different for each of the positive electrode plates 11 or for each group including a predetermined number of positive electrode plates 11. The identification mark portion 36 may indicate a lot number assigned to a group of products that are produced at the same timing using the same material or may indicate a product number assigned to each product.

The identification mark portions 36 can differentiate among individual positive electrode plates 11 or individual production lots, and are used to acquire the information about the production of the positive electrode plate 11. For example, a producer of a positive electrode plate 11 has a database including the information about the production of the positive electrode plate 11, the information being associated with the identification mark portion 36 of the positive electrode plate 11. Therefore, the identification mark portion 36 is read by a reading device such as a reader to specify the positive electrode plate 11, thereby making it possible to acquire the information about the production of the positive electrode plate 11. Examples of the information about the production of the positive electrode plate 11 include production process history records including the information such as a production line and production date.

The identification mark portion 36 is formed of at least one selected from numbers, characters, and identification codes, for example. The identification mark portion 36 may be a mark formed of a combination of numbers and characters. The identification code included in the identification mark portion 36 may be any of a one-dimensional code, a two-dimensional code, and a three-dimensional code, but is preferably a two-dimensional code. In the example illustrated in FIG. 2, a square two-dimensional code (QR code) (registered trademark)) is formed as the identification mark portion 36.

It is sufficient that the identification mark portion 36 is readable using the reading device such as a reader. In addition, the identification mark portion 36 is formed by means of laser welding.

In a method of producing the positive electrode plate 11 of an embodiment, the positive electrode lead 20 is irradiated from outside with laser light in a state in which the positive electrode lead 20 is stacked on the exposed portion 32 to form the molten and solidified portion that penetrates the positive electrode lead 20 in the thickness direction to reach the exposed portion 32, and joins the positive electrode lead 20 and the exposed portion 32. At that time, the identification mark portion 36 is formed from one or both of a discolored portion and a recess formed in the outer surface of the positive electrode lead 20.

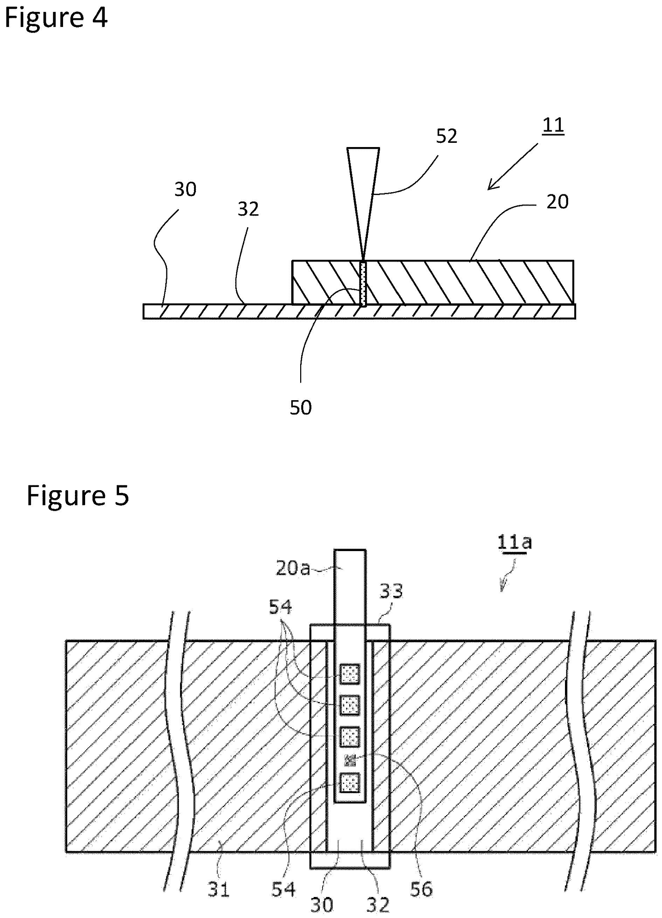

FIG. 4 is a diagram illustrating a state in which the positive electrode lead 20 and the exposed portion 32 are joined by a molten and solidified portion 50 that forms the identification mark portions 36, and shows a sectional view of the positive electrode lead 20 and the exposed portion 32. The laser welding forms the molten and solidified portion 50 that joins the positive electrode lead 20 and the exposed portion 32, by irradiating the positive electrode lead 20 from outside with laser light 52 in a state in which the positive electrode lead 20 is stacked on the exposed portion 32. At this time, the molten and solidified portion 50 penetrates the positive electrode lead 20 in the thickness direction by the laser light 52 with which the positive electrode lead 20 is irradiated, and reaches the exposed portion 32. The molten and solidified portion 50 forms discoloration or a recess due to irradiation of the laser light 52 in the outer surface of the positive electrode lead 20, and a mark is formed by the discoloration or the recess. The laser welding for forming the identification mark portion 36 forms the molten and solidified portion 50 by outputting, from a laser irradiation device, higher laser power than that of normal laser marking, or the like. Since the identification mark portion 36 thus formed by means of laser irradiation is excellent in durability, a reading error is hard to occur even after the use of the positive electrode plate 11.

An identification mark portion formed by means of the normal laser marking that forms no joint portion of the positive electrode lead 20 and the exposed portion 32 may be formed, on the positive electrode lead 20, together with the identification mark portion 36 formed from the molten and solidified portion 50. In one identification mark portion 36, the molten and solidified portion 50 is not necessarily formed over all ranges of the mark portion, and the molten and solidified portion 50 may be formed in only a partial range of the mark portion.

In one example of the embodiment, in the positive electrode lead 20, a portion where the identification mark portion 36 is disposed is covered by the tape 33. In this case, for example, the identification mark portion 36 is read by turning the tape 33, but since the identification mark portion 36 is covered by the tape 33, there is an advantage in that the identification mark portion 36 is unlikely to deteriorate even when the positive electrode plate 11 is used for a long period of time.

As illustrated in FIG. 3, the negative electrode plate 12 has the exposed portion 42 formed in which a surface of the negative electrode core 40 is exposed. The exposed portion 42 is formed in which the negative electrode mixture slurry is not applied on the negative electrode core 40 so that the negative electrode mixture layer 41 is not provided. Alternatively, the exposed portion 42 may be formed by peeling a part of the negative electrode mixture layer 41. In the present embodiment, the exposed portion 42 is formed at one position of an end portion of the negative electrode plate 12 in the longitudinal direction (a left-right direction in FIG. 3) that is located on the outer circumferential side of the electrode assembly 14. Note that the position where the exposed portion 42 is formed is not limited to the end portion of the negative electrode plate 12 in the longitudinal direction, and for example, the exposed portion 42 may be formed at each of a plurality of positions spaced from each other in the longitudinal direction.

The negative electrode plate 12 has the negative electrode lead 21 joined to the exposed portion 42, and a plurality of identification mark portions 46 formed on an outer surface of the negative electrode lead 21, in the same manner as in the positive electrode plate 11. Each of the identification mark portions 46 is formed on the outer surface of the negative electrode lead 21 by a molten and solidified portion that penetrates the negative electrode lead 21 in the thickness direction to reach the exposed portion 42, and joins the negative electrode lead 21 and the exposed portion 42. In a case where a plurality of exposed portions 42 are formed in the negative electrode plate 12 and one negative electrode lead 21 is joined to each of the exposed portions 42, it is sufficient that the identification mark portion 46 is formed on any one of the negative electrode leads 21, but the identification mark portions 46 may be also formed on a plurality of negative electrode leads 21 or all the negative electrode leads 21.

The exposed portion 42 preferably includes a first surface to which the negative electrode lead 21 is to be joined, and a second surface opposite to the first surface, in the same manner as in the exposed portion 32 of the positive electrode plate 11. The exposed portion 42 is formed from one end of the negative electrode plate 12 in the longitudinal direction, to be wider than the exposed portion 32. In addition, a tape 43 is provided on the negative electrode plate 12, to cover the negative electrode lead 21, the exposed portion 42, and a region adjacent to the exposed portion 42 in the negative electrode mixture layer 41. Note that the tape 43 need not cover the entirety of the exposed portion 42. The same one as the tape 33 of the positive electrode plate 11 can be used for the tape 43.

Since the same configuration as that of the identification mark portion 36 of the positive electrode plate 11 can be applied to the identification mark portions 46 including the identification mark portion 46 formed by the molten and solidified portion that joins the negative electrode lead 21 and the exposed portion 42, the description of the identification mark portion 46 can be found in the description of the identification mark portion 36.

In a method of producing the negative electrode plate 12 of an embodiment, the negative electrode lead 21 is irradiated from outside with laser light in a state in which the negative electrode lead 21 is stacked on the exposed portion 42 to form the molten and solidified portion that penetrates the negative electrode lead 21 in the thickness direction to reach the exposed portion 42, and joins the negative electrode lead 21 and the exposed portion 42, in the same manner as in the positive electrode plate 11. The identification mark portion 46 is formed from one or both of a discolored portion and a recess formed in the outer surface of the negative electrode lead 21 by the molten and solidified portion.

According to the positive electrode plate 11, the negative electrode plate 12, and a method of producing the positive electrode plate 11 and the negative electrode plate 12, and the cylindrical battery 10 as described above, in each lead 20, 21, the identification mark portion 36, 46 is formed on the outer surface of an exposed portion by the molten and solidified portion that joins the lead and the exposed portion. Thus, in each lead 20, 21, the identification mark portion 36, 46 can be used as a joint portion that joins the lead and the exposed portion. Therefore, the formation range of the identification mark portion 36, 46 in each lead 20, 21 can be widened. Accordingly, in each lead 20, 21, it becomes easy to provide a plurality of identification mark portions 36, 46 having the same contents to increase the opportunities to read the identification mark portions 36, 46 or to provide a plurality of identification mark portions 36, 46 having different contents from each other to increase the identification information.

FIG. 5 is a diagram corresponding to FIG. 2, in a positive electrode plate 11a of a comparative example. In the positive electrode plate 11a of the comparative example, unlike the positive electrode plate 11 of an embodiment illustrated in FIG. 2, a positive electrode lead 20a is joined to an exposed portion 32 of the positive electrode plate 11a by a plurality of joint portions 54 and one identification mark portion 56 is provided at a position different from the joint portions 54 of the positive electrode lead 20a. FIG. 5 is a schematic perspective view illustrating a formation range of each joint portion 54 indicated by a sand part. The plurality of joint portions 54 are provided at four positions as many as the number of the identification mark portions 36 of the positive electrode lead 20 of an embodiment in FIG. 2. The four joint portions 54 are arranged in the longitudinal direction of the positive electrode lead 20a. Each joint portion 54 is formed by means of ultrasonic welding using an ultrasonic horn, for example. In this case, at a position that overlaps with the joint portion 54 in the thickness direction of the positive electrode lead 20a in the outer surface of the positive electrode lead 20a, deformation such as a recess often occurs due to pressing of an ultrasonic horn. Therefore, the identification mark portion 56 is provided at a position that does not overlap with the joint portion 54 in the thickness direction of the positive electrode lead 20a. The identification mark portion 56 is formed by means of normal laser marking by which the molten and solidified portion does not reach the exposed portion 32 by means of laser irradiation, for example.

In such a comparative example, the formation range of the identification mark portion 56 becomes narrow, which makes it difficult to increase the number of the identification mark portions 56 and increase their respective dimensions as compared with the identification mark portions 36 illustrated in FIG. 2. According to the above-described embodiment, such inconveniences can be solved.

Note that in the above-described embodiment, a plurality of identification mark portions 36, 46 are provided on each of the positive electrode lead 20 and the negative electrode lead 21, but the identification mark portions may be provided on only the positive electrode lead 20 or only the negative electrode lead 21. The number of identification mark portions provided on one or both of the positive electrode lead 20 and the negative electrode lead 21 is not limited to the plural, and only one identification mark portion may be provided. On the other hand, in a case where each of the leads of one or both of the positive electrode lead 20 and the negative electrode lead 21 has a plurality of identification mark portions formed by the respective molten and solidified portions that join the lead and the exposed portion, the joining strength between the lead and the exposed portion can be further increased.

The present disclosure will be further described with the following embodiments.

Configuration 1: An electrode plate that has a core, and a mixture layer formed on the core, and is provided with an exposed portion where a surface of the core is exposed, the electrode plate having a lead joined to the exposed portion, and an identification mark portion formed on an outer surface of the lead, wherein the identification mark portion includes at least one of a discolored portion and a recess formed in the outer surface of the lead by a molten and solidified portion that penetrates the lead in a thickness direction to reach the exposed portion, and joins the lead and the exposed portion.

Configuration 2: The electrode plate according to configuration 1, wherein a plurality of the identification mark portions are formed.

Configuration 3: The electrode plate according to configuration 1 or 2, wherein the identification mark portion is formed by means of laser welding.

Configuration 4: A battery comprising an electrode assembly comprising the electrode plate according to any one of configurations 1 to 3, and an outer housing body that houses the electrode assembly.

Configuration 5: A method of producing an electrode plate that has a core, and a mixture layer formed on the core, and is provided with an exposed portion where a surface of the core is exposed, the electrode plate having a lead joined to the exposed portion, and an identification mark portion formed on an outer surface of the lead, the method including irradiating the lead from outside with laser light in a state in which the lead is stacked on the exposed portion to form a molten and solidified portion that penetrates the lead in a thickness direction to reach the exposed portion, and joins the lead and the exposed portion, so that the identification mark portion is formed from at least one of a discolored portion and a recess formed in the outer surface of the lead by the molten and solidified portion.

### REFERENCE SIGNS LIST

10 Cylindrical battery, 11, 11a Positive electrode plate, 12 Negative electrode plate, 13 Separator, 14 Electrode assembly, 16 Outer housing can, 17 Sealing assembly, 18, 19 Insulating plate, 20, 20a Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 32, 42 Exposed portion, 33, 43 Tape, 36, 46 Identification mark portion, 40 Negative electrode core, 41 Negative electrode mixture layer, 50 Molten and solidified portion, 52 Laser light, 54 Joint portion, 56 Identification mark portion.

## Claims

1. An electrode plate that has: a core; and a mixture layer formed on the core, and is provided with an exposed portion where a surface of the core is exposed, the electrode plate comprising:
a lead joined to the exposed portion; and
an identification mark portion formed on an outer surface of the lead, wherein
the identification mark portion includes at least one of a discolored portion and a recess formed in the outer surface of the lead by a molten and solidified portion that penetrates the lead in a thickness direction to reach the exposed portion, and joins the lead and the exposed portion.

2. The electrode plate according to claim 1, wherein
a plurality of the identification mark portions are formed.

3. The electrode plate according to claim 1, wherein
the identification mark portion is formed by means of laser welding.

4. A battery comprising:
an electrode assembly comprising the electrode plate according to any one of claims 1 to 3; and
an outer housing body that houses the electrode assembly.

5. A method of producing an electrode plate that has: a core; and a mixture layer formed on the core, and is provided with an exposed portion where a surface of the core is exposed,
the electrode plate comprising:
a lead joined to the exposed portion; and
an identification mark portion formed on an outer surface of the lead,
the method comprising irradiating the lead from outside with laser light in a state in which the lead is stacked on the exposed portion to form a molten and solidified portion that penetrates the lead in a thickness direction to reach the exposed portion, and joins the lead and the exposed portion, so that the identification mark portion is formed from at least one of a discolored portion and a recess formed in the outer surface of the lead by the molten and solidified portion.
